(19) Europäisches Patentamt
European Patent Office
Office européen des brevets

(11) Veröffentlichungsnummer: **0 152 005**
**B1**

(12) # EUROPÄISCHE PATENTSCHRIFT

(45) Veröffentlichungstag der Patentschrift: **20.04.88**

(51) Int. Cl.⁴: **C 09 B 67/22**, C 09 B 29/085, D 06 P 1/18

(21) Anmeldenummer: **85100852.4**

(22) Anmeldetag: **28.01.85**

(54) **Mischungen von Monoazofarbstoffen.**

(30) Priorität: **13.02.84 DE 3405021**

(43) Veröffentlichungstag der Anmeldung:
**21.08.85 Patentblatt 85/34**

(45) Bekanntmachung des Hinweises auf die Patenterteilung:
**20.04.88 Patentblatt 88/16**

(84) Benannte Vertragsstaaten:
**CH DE FR GB IT LI**

(56) Entgegenhaltungen:
**EP - A - 0 093 935**
**FR - A - 2 071 945**
**GB - A - 2 030 167**

(73) Patentinhaber: **CASSELLA Aktiengesellschaft, Hanauer Landstrasse 526, D-6000 Frankfurt am Main 61 (DE)**

(72) Erfinder: **Bühler, Ulrich, Dr., Kastanienweg 8, D-8755 Alzenau (DE)**
Erfinder: **Hähnke, Manfred, Dr., Behring-Strasse 13, D-6233 Kelkheim (DE)**
Erfinder: **Bode, Albert, Finkenweg 1, D-6231 Schwalbach (DE)**
Erfinder: **Roth, Kurt, Breckenheimer Strasse 35, D-6238 Hofheim (DE)**
Erfinder: **Boos, Margarete, Am See 6, D-6234 Hattersheim 3 (DE)**

(74) Vertreter: **Urbach, Hans-Georg, Dr. et al, Hanauer Landstrasse 526, D-6000 Frankfurt am Main 61 (DE)**

**EP 0 152 005 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Mischungen von Monoazofarbstoffen, die dadurch gekennzeichnet sind, dass sie zwei oder mehr verschiedene Farbstoffe der Formel I

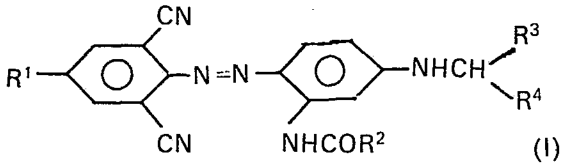

(I)

in der

$R^1$ Alkyl mit 1 bis 6 C-Atomen, Cyclopentyl, Cyclohexyl, Fluor, Chlor, Brom, Alkoxy mit 1 bis 4 C-Atomen oder Trifluormethyl,

$R^2$ Alkyl mit 1 bis 3 C-Atomen und

$R^3$ und $R^4$ unabhängig voneinander Alkyl mit 1 bis 4 C-Atomen bedeuten, enthalten oder aus diesen Farbstoffen bestehen.

Die Erfindung betrifft auch ein Verfahren zur Herstellung der Farbstoffmischungen sowie ihre Verwendung zum Färben und Bedrucken von synthetischen hydrophoben Materialien.

Einzelfarbstoffe der Formel I, worin $R^1$ Methyl, $R^2$ Niederalkyl bedeutet und $R^3$ und $R^4$ jeweils für eine Alkylgruppe stehen, und ihre Verwendung zum Färben von synthetischen Textilmaterialien sind aus der DE-OS 2 935 011 bekannt.

Es wurde nun überraschenderweise gefunden, dass die erfindungsgemässen Farbstoffmischungen beim Färben und Bedrucken von hydrophoben synthetischen Materialien den aus der DE-OS-2 935 011 bekannten, vergleichbaren Einzelfarbstoffen, insbesondere wenn sie zwei oder mehr verschiedene Einzelfarbstoffe der Formel I enthalten, im Hinblick auf färberisches Verhalten und coloristische Echtheiten erheblich überlegen sind. Die in den erfindungsgemässen Farbstoffmischungen enthaltenen Einzelfarbstoffe der Formel I, in der

$R^1$ Fluor, Chlor, Brom, Alkoxy mit 1 bis 4 C-Atomen oder Trifluormethyl,

$R^2$ Alkyl mit 1 bis 3 C-Atomen und

$R^3$ und $R^4$ unabhängig voneinander Alkyl mit 1 bis 4 C-Atomen bedeuten, sind neu. Sie und ihre Herstellung sowie ihre Verwendung zum Färben und Bedrucken von hydrophoben synthetischen Materialien werden ebenfalls im Rahmen der vorliegenden Erfindung beansprucht. Auch die neuen Einzelfarbstoffe sind den bekannten Einzelfarbstoffen in färberischen Eigenschaften und in den coloristischen Echtheiten überlegen.

Alkylreste mit 1 bis 6 C-Atomen, die in der Formel I für $R^1$ stehen können, sind z.B. Methyl, Ethyl, Propyl, i-Propyl, n-Butyl, i-Butyl, sek-Butyl, tert-Butyl, n-Pentyl, i-Pentyl, n-Hexyl.

Alkoxyreste mit 1 bis 4 C-Atomen, die in der Formel I für $R^1$ stehen können, sind z.B. Methoxy, Ethoxy, n-Propoxy, i-Propoxy, n-Butoxy, i-Butoxy, sek-Butoxy und tert-Butoxy.

Alkylreste mit 1 bis 3 C-Atomen, die in der Formel I für $R^2$ stehen können, sind Methyl, Ethyl, n-Propyl und i-Propyl.

Alkylreste mit 1 bis 4 C-Atomen, die in der Formel I für $R^3$ und $R^4$ stehen können, haben die Bedeutungen von $R^2$ und können darüberhinaus noch für n-Butyl, i-Butyl, sek-Butyl und tert-Butyl stehen.

Bevorzugte Farbstoffmischungen enthalten oder bestehen aus zwei oder mehr Einzelfarbstoffen der Formel I, deren Reste $R^3$ Methyl oder Ethyl und deren Reste $R^4$ Alkyl mit 1 bis 3 C-Atomen und/oder deren Reste $R^1$ für Alkyl mit 1 bis 3 C-Atomen, Trifluormethyl, Chlor, Brom, Methoxy oder Ethoxy stehen.

Besonders bevorzugte Farbstoffmischungen enthalten oder bestehen aus zwei oder mehr Einzelfarbstoffen der Formel I, bei denen der Rest $R^1$ Ethyl und insbesondere Methyl bedeutet und/oder die sich mindestens in der Bedeutung für den Rest $R^2$ unterscheiden und/oder die mindestens einen Einzelfarbstoff mit $R^2$ = i-Propyl, vorzugsweise n-Propyl, enthalten. Ganz besonders bevorzugte Farbstoffmischungen enthalten mindestens zwei Einzelfarbstoffe der Formel I mit $R^1$ = Methyl, die sich in der Bedeutung für den Rest $R^2$ unterscheiden und von denen ein Farbstoff für $R^2$ die Bedeutung n-Propyl besitzt.

Bevorzugte Reste für erfindungsgemässe Einzelfarbstoffe der Formel I sind:

$R^1$: n-Propyl, i-Propyl, insbesondere Ethyl, Chlor, Brom, Methoxy und Ethoxy

$R^2$: Ethyl und i-Propyl, insbesondere n-Propyl,

$R^3$: Methyl oder Ethyl und

$R^4$: Alkyl mit 1 bis 3 C-Atomen.

Bevorzugte erfindungsgemässe Einzelfarbstoffe der Formel I tragen als Substituenten bevorzugte Reste; besonders bevorzugte Einzelfarbstoffe tragen besonders bevorzugte Reste.

Die Herstellung der Einzelfarbstoffe der Formel I erfolgt dadurch, dass man Azofarbstoffe der Formel II

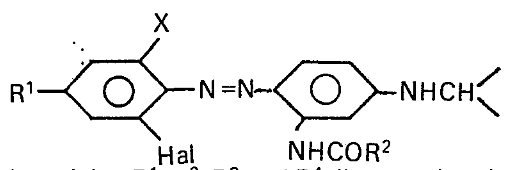

(II)

in welcher $R^1$, $R^2$, $R^3$ und $R^4$ die vorstehenden Bedeutungen haben, X Cyan oder Halogen und Hal ein Halogenatom, wie Chlor oder insbesondere Brom bedeutet, in an sich bekannter Weise z.B. nach den Angaben der DOS 1 809 920, 1 809 921, den GB-Patentschriften 1 184 825, 1 125 685, der DAS 1 544 563, der DOS 2 310 745, der DAS 2 456 495, der DAS 2 610 675, der DOS 2 724 116, der DOS 2 724 117, der DOS 2 834 137, der DOS 2 341 109, der US-Patentschrift 3 821 195, der DOS 2 715 034 oder der DOS 2 134 896 einer nukleophilen Austauschreaktion unterwirft, wobei als nukleophiles Agens das Cyanidion $CN^-$ eingesetzt wird.

Als Lösungsmittel für die Austauschreaktion werden inerte organische Lösungsmittel verwendet, wie z.B. Nitrobenzol oder Glykol- oder Diglykol-monomethylether oder Diglykolmonoethylether oder Mischungen solcher Lösungsmittel

untereinander und mit tertiären organischen Stickstoffbasen, dipolare aprotische Lösungsmittel, wie z.B. Methylpyrrolidon, Pyridin, Dimethylformamid oder Dimethylsulfoxyd, Dicyan-dialkylthioether, Wasser oder wässrige Systeme, bestehend aus Wasser und einem mit Wasser nicht mischbaren organischen Lösungsmittel (wie z.B. Nitrobenzol), vorzugsweise in Gegenwart eines Netz- bzw. Dispergiermittels oder eines bekannten Phasentransferkatalysators, oder wässrige Systeme aus Wasser und einem wasserlöslichen, inerten organischen Lösungsmittel, wie z.B. Ethylenglykol oder Dimethylformamid.

Günstig wirkt sich auf die Austauschreaktion auch die Anwesenheit von organischen, basischen Stickstoffverbindungen, wie z.B. Pyridin und Pyridinbasen aus.

Die Reaktionstemperaturen liegen normalerweise zwischen 20 und 150 °C.

Das nukleophile Agens $CN^-$ wird der Reaktion in Form eines gegebenenfalls komplexen Metallcyanids, wie z.B. eines Alkali- oder Erdalkalicyanids, Zinkcyanids, Alkalicyanozinkats oder -ferrats, vorzugsweise aber in Form von Kupfer-I-cyanid oder eines Kupfer-I-cyanid ausbildenden Systems zugefügt. Besonders bewährt ist der Einsatz einer Kombination von Alkalicyanid mit Kupfer-I-cyanid, wobei das Mengen-Verhältnis von Alkali und Kupfersalz in weiten Grenzen variiert werden kann.

Der gängige Bereich des Alkalicyanid/Kupfer-I-cyanid-Verhältnisses liegt bei 5:95 bis 95:5. Auch ausserhalb dieser Grenzen ist noch die positive gegenseitige Beeinflussung der Komponenten feststellbar. Selbstverständlich ist es auch möglich, das Kupfer-I-cyanid seinerseits durch ein Kupfer-I-cyanid ausbildendes System, wie z.B. eine Kombination von Alkalicyanid mit einem anderen Kupfersalz, vorzugsweise Kupfer-I-salz, wie z.B. Kupfer-I-halogenid, zu ersetzen.

Die zur Herstellung der Farbstoffe der Formel I erforderlichen Farbstoffe der Formel II können dadurch hergestellt werden, dass eine Diazoniumverbindung eines aromatischen Amins der allgemeinen Formel III

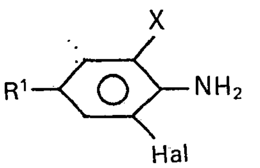

(III)

mit einer Kupplungskomponente der allgemeinen Formel IV

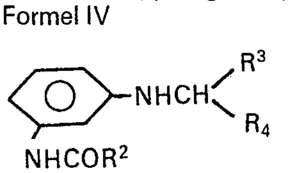

(IV)

worin $R^1$, $R^2$, $R^3$, $R^4$, X und Hal die bereits genannten Bedeutungen besitzen, gekuppelt wird.

Aus den Aminen der allgemeinen Formel III werden Diazoniumverbindungen in an sich bekannter Weise durch Einwirkung von salpetriger Säure oder anderen Nitrosoniumionen bildenden Systemen in einem sauren wässrigen Medium, einer Niederalkancarbonsäure, wie z.B. Ameisensäure, Essigsäure oder Propionsäure oder deren Mischungen oder einem organischen Lösungsmittel bei Temperaturen von 0 bis 40 °C erhalten.

Die Kupplung erfolgt ebenfalls in an sich bekannter Weise durch Vereinigung der erhaltenen Diazolösung mit einer Lösung der Kupplungskomponente bei Temperaturen von 0 bis 40 °C, vorzugsweise 0 bis 25 °C, in einem geeigneten Lösungsmittel, wie z.B. einem Alkanol mit 1 bis 4 C-Atomen, Dimethylformamid, vorzugsweise in mit Schwefelsäure, Salzsäure oder Phosphorsäure angesäuertem Wasser oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmässig sein, während der Kupplung den pH-Wert abzupuffern, z.B. durch Zugabe von Natriumacetat. Die Kupplung ist nach einigen Stunden beendet und der Farbstoff der Formel II kann wie üblich isoliert und getrocknet werden.

Die benötigten Kupplungskomponenten der Formel IV lassen sich aus bekannten Handelsprodukten nach bekannten Verfahren herstellen.

Die erfindungsgemässen Farbstoffmischungen enthalten oder bestehen aus zwei oder mehreren Farbstoffen der Formel I. In den erfindungsgemässen Farbstoffmischungen kann das Verhältnis der verschiedenen Farbstoffe der allgemeinen Formel I in relativ weiten Grenzen variieren. Im allgemeinen beträgt der Mindestgewichtsanteil eines Einzelfarbstoffs der Formel I 10% und der maximale Gewichtsanteil 90%. Bei Farbstoffmischungen, die nur aus zwei Einzelfarbstoffen der allgemeinen Formel I bestehen, ist ein Gewichtsverhältnis von 70:30 bis 30:70 bevorzugt, d.h. der Gewichtsanteil eines Einzelfarbstoffs beträgt vorzugsweise 30 bis 70%.

Die vorstehend genannten Gewichtsanteile und Gewichtsverhältnisse beziehen sich lediglich auf den aus den Farbstoffen der Formel I bestehenden Anteil der erfindungsgemässen Farbstoffmischungen. Die erfindungsgemässen Farbstoffmischungen können darüberhinaus auch noch andere Dispersionsfarbstoffe, insbesondere rote Anthrachinonfarbstoffe vom Typ C.I. Disperse Red 60 und/oder Stellmittel und/oder Hilfsmittel enthalten.

Bei erfindungsgemässen Farbstoffmischungen, die neben zwei oder mehr Einzelfarbstoffen der Formel I auch noch andere Farbstoffe, insbesondere anthrachinoide Rot-Farbstoffe vom Typ C.I. Disperse Red 60, d.h. Farbstoffe, die einen 2-Amino-4-hydroxy-anthrachinon-Rest enthalten, wie z.B. C.I. Disperse Red 132 oder C.I. Disperse Red 51, insbesondere aber das C.I. Disperse Red 60 selbst, und gegebenenfalls Hilfs- und/oder Stellmittel enthalten, kann das auf die Summe der Farbstoffe bezogene Gewichtsverhältnis der Farbstoffe der Formel I 10 bis 90 Gew.-% und das des anderen, insbesondere anthrachinoiden Rot-Farbstoffs 90 bis 10 Gew.-% betragen.

Die erfindungsgemässen Farbstoffmischungen können in Pulver- oder in Teigform vorliegen. Die pulverförmigen Farbstoffzubereitungen besitzen normalerweise einen Farbstoffgehalt von 30 bis 50 Gew.-%. Der Rest besteht aus Stell und/oder Hilfsmitteln, wie z.B. Dispergiermittel, Netzmittel, Emulgatoren, Entstaubungsmittel etc. Die in wässriger Suspension vorliegenden teigförmigen Farbstoffzubereitungen besitzen normalerweise einen Farbstoffgehalt von 20 bis 50 Gew.-%, einen Stell- und/oder Hilfsmittelgehalt von 20 bis 30 Gew.-%, der Rest ist Wasser. Als Hilfsmittel können die teigförmigen Farbstoffzubereitungen neben Dispergiermitteln, Emulgatoren und Netzmittel auch noch Eintrockungsverzögerer, wie z.B. Glykole oder Glyzerin, und Konservierungsmittel oder Fungizide enthalten.

Die erfindungsgemässen Farbstoffmischungen können nach verschiedenen Verfahren hergestellt werden, so z.B. durch Mischen von bereits gefinishten Einzelfarbstoffen oder durch Mischen von ungefinishten Einzelfarbstoffen und anschliessendem oder während des Mischvorgangs durchgeführtem Finish. Das Mischen von ungefinishten Einzelfarbstoffen wird vorzugsweise unter Zusatz von Dispergiermitteln und gegebenenfalls weiteren Hilfsmitteln durchgeführt. Dieser Mischprozess erfolgt zweckmässigerweise im Zusammenhang mit der für den Finish von Dispersionsfarbstoffen durchzuführenden Nasszerkleinerung bei Temperaturen von 0 bis 190 °C, zweckmässigerweise in geeigneten Mühlen, beispielsweise Kolloid-,Kugel-, Perl- oder Sandmühlen oder Dispersionsknetern, kann aber auch insbesondere bei bereits gefinishten Einzelfarbstoffen durch Mischen mit der Hand oder durch Einrühren in Dispergiermittel oder Färbeflotten bewirkt werden.

Bei der Nasszerkleinerung der Farbstoffe werden die Farbstoffe zusammen mit Dispergiermitteln in einem flüssigen Medium, vorzugsweise in Wasser, aufgeschlämmt und die Mischung der Einwirkung von Scherkräften ausgesetzt. Dabei werden die ursprünglich vorhandenen Farbstoff-Teilchen mechanisch so weit zerkleinert, dass eine optimale spezifische Oberfläche erreicht wird und die Sedimentation der Farbstoffe möglichst gering ist. Die Teilchengrösse der Farbstoffe liegt im allgemeinen bei etwa 0,001 mm.

Die bei der Nasszerkleinerung mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkylaryl-polyglykolethersulfate.

Die bei der Nasszerkleinerung erhaltenen Farbstoffdispersionen sollen für die meisten Anwendungsweisen giessbar sein und können auch noch weitere Hilfsmittel enthalten, z.B. solche, die als Oxydationsmittel wirken, wie z.B. Natrium-m-nitrobenzolsulfonat oder fungizide Mittel, wie z.B. Natrium-o-phenyl-phenolat und Natriumpentachlorphenolat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muss.

Für gewisse Anwendungsbereiche werden Pulvereinstellungen bevorzugt. Diese Pulver enthalten den Farbstoff, Dispergiermittel und andere Hilfsmittel, wie z.B. Netz-, Oxydations-, Konservierungs- und Entstaubungsmittel.

Ein Herstellungsverfahren für pulverförmige Farbstoffzubereitungen besteht darin, dass den oben beschriebenen flüssigen Farbstoffdispersionen die Flüssigkeit entzogen wird, z.B. durch Vakuumtrocknung, Gefriertrocknung, durch Trocknung auf Walzentrockner, vorzugsweise aber durch Sprühtrocknung.

Sollen die Farbstoffe für den Textildruck herangezogen werden, so werden die erforderlichen Mengen der Farbstoffeinstellungen zusammen mit Verdickungsmitteln, wie z.B. Alkali-Alginaten oder dergl., und gegebenenfalls weiteren Zusätzen, wie Fixierbeschleunigern, Netzmitteln und Oxydationsmitteln, zu Durckpasten verknetet.

Ein weiteres Verfahren zur Herstellung bevorzugter erfindungsgemässer Farbstoffmischungen, die zwei oder mehr Einzelfarbstoffe der Formel I enthalten oder aus ihnen bestehen, ist dadurch gekennzeichnet, dass man ein Amin der Formel V

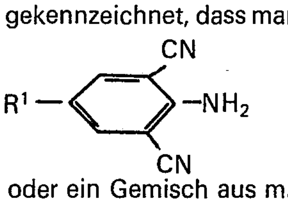

(V)

oder ein Gemisch aus mindestens zwei verschiedenen Aminen der Formel V diazotiert und auf eine Kupplungskomponente der Formel IV oder auf eine Mischung aus mindestens zwei verschiedenen Kupplungskomponenten der Formel IV kuppelt. Die Zusammensetzung der Mischung der Amine und/oder der Mischung der Kupplungskomponenten wird dabei so gewählt, dass erfindungsgemässe Farbstoffmischungen entstehen, die anschliessend noch in üblicher Weise gefinisht werden. Vorzugsweise wird ein Amin der Formel V diazotiert und auf ein Gemisch aus mindestens zwei verschiedenen Kupplungskomponenten der Formel IV gekuppelt. Die Diazotierung und Kupplung wird dabei in an sich bekannter Weise durchgeführt, wie sie für die Herstellung von Einzelfarbstoffen üblich und vorstehend für die Herstellung der Einzelfarbstoffe der Formel I beschrieben ist.

Nach einem bevorzugten weiteren Verfahren können die bevorzugten Farbstoffmischungen, die zwei oder mehr Einzelfarbstoffe der Formel I enthalten oder aus ihnen bestehen, auch dadurch

hergestellt werden, dass man in Farbstoffmischungen, die aus mindestens zwei Farbstoffen der Formel II bestehen, in an sich bekannter Weise Halogen gegen Cyan austauscht, wie es vorstehend für die Herstellung der Einzelfarbstoffe der Formel I beschrieben ist. Die Zusammensetzung der Mischung der Farbstoffe der Formel II wird dabei so gewählt, dass erfindungsgemässe Farbstoffmischungen entstehen, die anschliessend noch in üblicher Weise gefinisht werden.

Erfindungsgemässe Farbstoffmischungen können auch dadurch hergestellt werden, dass man eine Mischung aus mindestens zwei getrennt hergestellten, verschiedenen Farbstoffen auflöst und zur Kristallisation oder Ausfällung bringt. Dabei können die Einzelfarbstoffe auch getrennt aufgelöst und die einzelnen Lösungen vor der Kristallisation oder Ausfällung vereinigt werden. Zur Auflösung der Farbstoffe oder der Farbstoffmischung sind z.B. organische Lösungsmittel, wie Dimethylformamid, Dimethylsulfoxid, Chlorbenzol, o-Dichlorbenzol, Toluol etc., geeignet. Auch Gemische verschiedener Lösungsmittel können verwendet werden. Die Auflösung erfolgt zweckmässigerweise bei der Siedetemperatur des Lösungsmittels oder Lösungsmittelgemischs. Beim Abkühlen kristallisieren dann erfindungsgemässe Farbstoffmischungen aus. Statt durch Abkühlung können die Mischkristalle auch durch Ausfällung, d.h. durch Zusatz eines Lösungsmittels, in dem die Farbstoffe weniger löslich sind, zur Abscheidung gebracht werden.

Es kann zweckmässig sein, die erfindungsgemässen Farbstoffmischungen bzw. die erfindungsgemässen Einzelfarbstoffe in an sich bekannter Weise zu formieren, um sie in die bei der Färbetemperatur stabilste Kristallmodifikation zu überführen. Bei der Formierung der Farbstoffmischungen können Mischkristalle entstehen. Die Formierung kann in üblicher Weise, z.B. durch Erhitzen, entweder in wässriger Suspension nach der Synthese oder nach dem Finish oder im Verlauf des Finishs, zweckmässigerweise unter Zusatz von Formierungshilfsmitteln, Emulgiermitteln und/oder Lösungsvermittlern, durchgeführt werden.

Die erfindungsgemässen Farbstoffmischungen und die erfindungsgemässen Einzelfarbstoffe sind als solche oder auch im Gemisch mit anderen Dispersionsfarbstoffen vorzüglich zum Färben und Bedrucken von hydrophoben synthetischen Fasermaterialien geeignet. Überraschenderweise sind insbesondere die bevorzugten erfindungsgemässen Farbstoffmischungen den aus der DE-OS-2 935 011 bekannten Einzelfarbstoffen im Hinblick auf färberisches Verhalten und coloristische Echtheiten, wie z.B. Egalisiervermögen, Thermomigration, Thermofixierechtheit, Wasser-, Wasch- und Reibechtheit, insbesondere aber im Aufbau- und Ausziehvermögen und der Temperaturempfindlichkeit, weit überlegen. Ausserdem werden bei den erfindungsgemässen Farbstoffmischungen auch bei einer Herabsetzung der Färbetemperaturen noch hervorragend farbstarke Färbungen bei ausgezeichneter Baderschöpfung erhalten.

Als hydrophobe synthetische Materialien kommen z.B. in Betracht: Cellulose-2 1/2-acetat, Cellulosetriacetat, Polyamide und besonders hochmolekulare Polyester, wie z.B. Polyethylenglykolterephthalat, und deren Mischungen mit natürlichen Faserstoffen, wie z.B. Baumwolle, regenerierte Cellulosefasern oder Wolle.

Zur Herstellung der Färbeflotten werden die erforderlichen Mengen der Farbstoffeinstellungen mit dem Färbemedium, vorzugsweise mit Wasser, so weit verdünnt, dass sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel, zugesetzt.

Vorzugsweise werden die erfindungsgemässen Farbstoffmischungen und die erfindungsgemässen Einzelfarbstoffe zum Färben und Bedrucken von Materialien aus hochmolekularen Polyestern, insbesondere solchen auf Basis von Polyethylenglykoltherephthalaten oder deren Mischungen mit natürlichen Faserstoffen, oder von Materialien aus Cellulosetriacetat eingesetzt. Diese Materialien können z.B. in Form von flächen-, flocken- oder fadenförmigen Gebilden vorliegen und z.B. zu Garnen oder gewebten oder gestrickten Textilstoffen verarbeitet sein. Das Färben des genannten Fasergutes mit den erfindungsgemässen Farbstoffmischungen und den erfindungsgemässen Einzelfarbstoffen erfolgt in an sich bekannter Weise, vorzugsweise aus wässriger Suspension, gegebenenfalls in Gegenwart von Carriern, zwischen 80 bis ca. 110 °C nach dem Ausziehverfahren oder nach dem HT-Verfahren im Färbeautoklav bei 110 bis 140 °C, sowie nach dem sogenannten Thermofixierverfahren, wobei die Ware mit der Färbeflotte geklotzt und anschliessend bei etwa 180 bis 230 °C fixiert wird. Das Bedrucken der genannten Materialien kann so durchgeführt werden, dass die mit erfindungsgemässen Farbstoffmischungen oder erfindungsgemässe Einzelfarbstoffe enthaltenden Druckpasten bedruckte Ware zur Fixierung des Farbstoffs, gegebenenfalls in Gegenwart eines Carriers, bei Temperaturen zwischen 110 bis 230 °C mit HT-Dampf, Druckdampf oder Trockenhitze behandelt wird. Man erhält auf diese Weise sehr farbstarke rote Färbungen und Drucke mit sehr guten Echtheitseigenschaften, insbesondere einer sehr guten Lichtechtheit und einer sehr guten Trockenhitzeplissier- und Fixierechtheit.

Die erfindungsgemässen Einzelfarbstoffe und insbesondere die erfindungsgemässen Farbstoffmischungen sind wegen ihrer hohen Farbstärke und ihres ausgezeichneten färberischen Verhaltens eine gute Alternative zu den teureren anthrachinoiden Dispersionsfarbstoffen vom Typ C.I. Disperse Red 60 und können diese Farbstoffe daher ganz oder zum Teil ersetzen.

Beim Färben mit erfindungsgemässen Farbstoffmischungen nach dem HT-Verfahren kann die Färbetemperatur gegenüber dem Färben mit den aus der DE-OS 2 935 011 bekannten Einzelfarbstoffen bei gleich guten oder besseren coloristischen Effekten, z.B. von 130 °C auf 120 bis 125 °C gesenkt werden. Dabei tritt bei den erfindungsgemässen Farbstoffmischungen ausserdem noch eine wesentlich bessere Baderschöpfung ein. Überraschend war auch, dass die erfindungsgemässen Farbstoffmischungen bei Färbungen nach dem Carrierverfahren ein besseres Aufbau- und Ausziehvermögen besitzen.

Durch die erfindungsgemässen Farbstoffmischungen sind Cellulose-2 1/2-acetat, Cellulosetriacetat und Polyamide besser anfärbbar als mit den bekannten Einzelfarbstoffen der DE-OS 2 935 011.

Sofern Textilmaterialien gefärbt oder bedruckt werden sollen, die neben den genannten hydrophoben synthetischen Fasern noch natürliche Fasern, insbesondere die oben genannten, enthalten, können die erfindungsgemässen Farbstoffe und die erfindungsgemässen Farbstoffmischungen auch mit anderen Farbstoffklassen, wie z.B. Küpen-, Direkt- oder Reaktivfarbstoffen, gemeinsam eingesetzt werden. Die Farbstoffe werden dann nach der Applizierung in an sich bekannter Weise gleichzeitig oder nacheinander fixiert.

Die erfindungsgemässen Farbstoffe und die erfindungsgemässen Farbstoffmischungen eignen sich auch zum Färben der vorstehend aufgeführten hydrophoben Materialien aus organischen Lösungsmitteln und zum Färben in der Masse.

Die erfindungsgemässen Farbstoffe und die erfindungsgemässen Farbstoffmischungen eignen sich auch zum Färben von organischen Lösungsmitteln, Mineralölprodukten, Wachsen, Ölen, Fetten, Kunststoffen und Oberflächenbelägen, da sie in diesen Medien eine hohe Löslichkeit, hohe Farbstärke und gute Echtheiten, insbesondere gute Lichtechtheit, besitzen.

Organische Lösungsmittel, die gefärbt werden können, sind z.B. Alkohole, wie z.B. Ethanol; Ester, wie z.B. Essigsäure-ethylester; Ketone, wie z.B. Aceton; Glykole und Glykolether, wie z.B. Methylglykol, Butyldiglykol; aromatische Kohlenwasserstoffe, wie z.B. Toluol oder Xylole. Produkte, welche die vorgenannten Substrate enthalten und die demgemäss mit den erfindungsgemässen Farbstoffmischungen oder den erfindungsgemässen Einzelfarbstoffen gefärbt werden können, sind z.B. Druckfarben, Schreibtinten, Lacke, wie z.B. Transparentlacke für den Flexodruck. Anfärbbare Mineralölprodukte sind z.B. Diesel- und Heizöle. Kunststoffe, die in der Masse gefärbt werden können, sind z.B. Polyvinylchlorid, Styrol-Butadiengemische, Acrylnitril-Butadiengemische, vor allem aber Polyolefine, wie Polyethylen, Polypropylen, vorzugsweise Polystyrol. Beim Massefärben der genannten Kunststoffe in an sich bekannter Weise werden Färbungen mit hohen Farbstärken und ausgezeichneten Echtheiten, insbesondere hervorragender Licht- und Wetterechtheit, erhalten.

Die organischen Lösungsmittel, Mineralölprodukte, Wachse, Öle, Fette, Kunststoffe und Oberflächenbeläge werden mit den erfindungsgemässen Farbstoffmischungen oder den erfindungsgemässen Einzelfarbstoffen dadurch gefärbt, dass die genannten Materialien im flüssigen, geschmolzenen oder thermoplastischen Zustand, z.B. bei Temperaturen von 0 bis 250 °C, vorzugsweise 10 bis 240 °C, mit den Farbstoffen vermischt werden, wobei unter rascher Auflösung des Farbstoffs oder der Farbstoffe innerhalb weniger Sekunden bis Minuten die Färbung des Substrats eintritt.

Die folgenden Ausführungsbeispiele veranschaulichen die Herstellung der erfindungsgemässen Farbstoffe und Farbstoffmischungen und Möglichkeiten zu ihrer Anwendung. Angegebene Prozente sind Gewichtsprozente.

Beispiel 1

a) In 200 ml Dimethylsulfoxid werden bei 70 bis 75 °C nacheinander 8,5 g Natriumcyanid und 28 g Kupfer-I-cyanid eingetragen und 1/2 h gerührt. Dann werden bei derselben Temperatur 104,8 g des Dibromvorproduktes der Formel II, in der X und Hal Brom, $R^1$ Ethyl, $R^2$ n-Propyl, $R^3$ Methyl und $R^4$ Ethyl bedeuten, eingetragen und der Ansatz auf 110 bis 112 °C erwärmt, langsam abgekühlt und bei 30 °C filtriert. Nach dem Waschen mit 50 ml Dimethylsulfoxid, 7,5%igem Ammoniakwasser und Wasser und Trocknen bis zur Gewichtskonstanz erhält man 64 g des Farbstoffs der Formel I, in der $R^1$ Ethyl, $R^2$ n-Propyl, $R^3$ Methyl und $R^4$ Ethyl bedeuten, der bei 197 bis 199 °C schmilzt und sich in Essigester mit roter Farbe löst.

b) 0,3 g des so erhaltenen Farbstoffs werden in einer Perlmühle unter Zusatz der doppelten Menge eines handelsüblichen Dispersionsmittels aus der Reihe der Ligninsulfonate fein dispergiert und dann in 2000 g Wasser eingerührt. Die Dispersion wird mit 4,0 g Na-acetat und 2,0 g eines handelsüblichen Dispergiermittels auf Basis eines Naphthalinsulfonsäure-Formaldehyd-Kondensats versetzt und mit Essigsäure auf einen pH-Wert von 4 bis 5 eingestellt.

In die so erhaltene Färbeflotte bringt man 100 g eines Polyestergewebes auf Basis von Polyethylenglykolterephthalat ein und färbt 3/4 h bei 120 °C.

Nach anschliessendem Spülen, reduktiver Nachbehandlung mit einer auf pH 10 bis 11 (Natronlauge) gestellten 0,2%igen Natriumdithionitlösung während 15 Minuten bei 70 bis 80 °C, Spülen und Trocknen, erhält man eine farbstarke rote Färbung mit sehr guten coloristischen Eigenschaften.

Beispiel 2

a) Wird analog zu den Angaben des Beispiels 1a anstelle des dort genannten Dibromvorproduktes eine Mischung aus 51,0 g des Dibromvorproduktes der Formel II, in der X und Hal Brom, $R^1$ Methyl, $R^2$ n-Propyl, $R^3$ Methyl, $R^4$ Ethyl bedeuten, und 48,2 g des Dibromvorproduktes der Formel II, in der X und Hal Brom, $R^1$ Methyl, $R^2$ Methyl, $R^3$ Methyl und $R^4$ Ethyl bedeuten, eingesetzt, so erhält man 61,0 g eines Farbstoffgemischs, das aus zwei Einzelfarbstoffen der Formel

I besteht, wobei die Reste in der Formel I folgende Bedeutung besitzen:

Farbstoff 1: $R^1$ Methyl, $R^2$ n-Propyl, $R^3$ Methyl, $R^4$ Ethyl;

Farbstoff 2: $R^1$ Methyl, $R^2$ Methyl, $R^3$ Methyl, $R^4$ Ethyl.

b) Wird mit 0,15 g des erhaltenen Farbstoffgemischs, wie in Beispiel 1b beschrieben, eine Färbeflotte hergestellt und darin 100 g eines Polyestergewebes auf Basis von Polyethylenglykolterephthalat 1 1/2 h bei Kochtemperatur in Gegenwart von 3 g eines handelsüblichen Carriers auf Basis Methylnaphthalin, 2 eines Dispergiermittels auf Basis Formaldehydkondensationsprodukt, 4 g wasserfreies Natriumacetat und 6 g 30%iger Essigsäure gefärbt und, wie in Beispiel 1 beschrieben, fertiggestellt, so erhält man eine rosa Färbung mit guten Echtheiten.

c) Aus 0,3 g des in Beispiel 2a erhaltenen Farbstoffgemischs wird, wie in Beispiel 1b beschrieben, eine Färbeflotte hergestellt und darin 100 g Polyestergewebe auf der Basis von Polyethylenglykoltherephthalat 3/4 h bei 120 °C gefärbt und fertiggestellt. Die erhaltene Färbung wird mit A bezeichnet. In der zurückbleibenden Färbeflotte wird eine Nachzugsfärbung dadurch hergestellt, dass darin nochmals 100 g Polyestergewebe auf der Basis von Polyethylenglykolterephthalat 1 h bei 130 °C gefärbt und fertiggestellt werden. Die so erhaltene Nachzugsfärbung wird mit B bezeichnet. Mit 0,3 g des aus der DE-OS 2 935 011 bekannten Farbstoffs der Formel I, bei dem $R^1$ Methyl, $R^2$ Methyl, $R^4$ Methyl und $R^3$ Ethyl bedeuten, wurde analog verfahren und die Farbstärke der erhaltenen Färbungen und Nachzugsfärbungen ausgemessen. Bezogen auf eine Farbstärke von 100% für die mit dem erfindungsgemässen Farbstoffgemisch erhaltene Färbung A wurden dabei folgende Ergebnisse erhalten:

| | Farbstärke der Färbung | Nachzugsfärbung |
|---|---|---|
| Erfindungsgemässes Farbstoffgemisch | 100% | 2,2% |
| Einzelfarbstoff gemäss DE-OS 2 935 011 | 66,3% | 44,3% |

Daraus ist zu ersehen, dass mit dem erfindungsgemässen Farbstoffgemisch sowohl eine wesentlich farbstärkere Färbung als auch eine wesentlich bessere Baderschöpfung erzielt wird.

Beispiel 3

In 400 ml Dimethylformamid werden 20,1 g des Farbstoffs der Formel I, worin $R^1$ Methyl, $R^2$ n-Propyl, $R^3$ Methyl und $R^4$ Ethyl bedeuten, und 20,8 g des Farbstoffs des Beispiels 1 bei 110 °C gelöst, die Lösung langsam auf Raumtemperatur abgekühlt und der Ansatz mit 2000 ml Wasser vollständig gefällt, filtriert und mit Wasser lösungsmittelfrei gewaschen. Nach vollständiger Trocknung erhält man so 40,9 g einer aus den beiden Einzelfarbstoffen bestehenden Farbstoffmischungen, die sich ebenfalls mit roter Farbe in Essigester löst.

Auch diese Farbstoffmischung ergibt, wenn sie nach den Angaben der Beispiele 1b oder 2b gefärbt wird, farbstarke klare rote bzw. rosa Färbungen mit guten Echtheiten.

Beispiel 4

Durch gemeinsame Feindispergierung in einer praxisüblichen Perlmühle wird aus 5 g eines Farbstoffs der Formel I, worin die Reste $R^1$ bis $R^4$ alle jeweils Methyl bedeuten, 5 g eines Farbstoffs der Formel I, worin $R^1$ Methyl, $R^2$ n-Propyl, $R^3$ Methyl und $R^4$ Methyl bedeuten, 10 g C.I. Disperse Red 60 100%ig, 10 g eines handelsüblichen Dispergiermittels auf Basis Ligninsulfonat und 160 g Wasser eine gefinishte färbefertige Farbstoffpräparation hergestellt, welche sich in wässrigen Färbeflotten und Druckpasten sehr gut verteilen lässt.

Man erhält bei praxisüblicher Anwendung sowohl im Auszieh-Färbeverfahren bei 98 bis 100 °C unter Zusatz eines Carriers als auch im HT-Färbeverfahren bei 130 °C auf einem Polyester-Garn je nach eingesetzter Farbstoffmenge eine Rosafärbung oder eine farbstarke Rotfärbung mit hoher Klarheit der Nuance und hohem Echtheitsniveau.

Die Färbung bei 98 bis 100 °C wird in einer Flotte durchgeführt, die 2 g fein dispergierte Farbstoff-Präparation, 2 g/l Na-acetat, 3 $cm^3$/l Essigsäure 30%ig, 2 g/l Carrier (Basis Trichlorbenzol) enthält. Es werden 100 g Polyester-Garn (Basis Polyethylenterephthalat) im Flottenverhältnis 1:10 60 min bei 100 °C gefärbt.

Die Färbung bei 130 °C wird in einer Flotte durchgeführt, die 1 g fein dispergierte Farbstoff-Präparation, 2 g/l Na-acetat, 3 $cm^3$/l Essigsäure 30%ig enthält. Es werden 100 g Polyestergarn mit einem Flottenverhältnis 1:10 40 min bei 130 °C gefärbt.

Nach beiden Färbeverfahren wurden klare farbstarke rote Färbungen mit guten Echtheiten erhalten.

In der nachstehenden Tabelle sind weitere erfindungsgemässe Farbstoffe bzw. Farbstoffmischungen angegeben, die auf Polyestermaterialien ebenfalls farbstarke rote bis rotviolette Färbungen bzw. Drucke mit ebenfalls sehr guten coloristischen Echtheiten liefern.

Die in den folgenden Tabellen in den letzten Spalten angegebenen Zahlen haben folgende Bedeutungen:

1 = rot
2 = rubin
3 = blaustichig-rot
4 = rotviolett
5 = rosa

Tabelle I

Einzelfarbstoffe der Formel I

| $R^1$ | $R^2$ | $R^3$ | $R^4$ | Nuance auf Polyester |
|---|---|---|---|---|
| $C_2H_5$ | $CH_3$ | $CH_3$ | $CH_3$ | 1 |
| $C_2H_5$ | $CH_3$ | $C_2H_5$ | $CH_3$ | 1 |
| $C_2H_5$ | $CH_3$ | $C_2H_5$ | $C_2H_5$ | 1 |
| $C_2H_5$ | $CH_3$ | $CH_3$ | i-$C_4H_9$ | 1 |
| $C_2H_5$ | $C_2H_5$ | $C_2H_5$ | $CH_3$ | 1 |
| $C_2H_5$ | $C_2H_5$ | $CH_3$ | i-$C_3H_7$ | 1 |
| $C_2H_5$ | n-$C_3H_7$ | $CH_3$ | $CH_3$ | 1 |
| $C_2H_5$ | n-$C_3H_7$ | $C_2H_5$ | $CH_3$ | 1 |
| $C_2H_5$ | i-$C_3H_7$ | $C_2H_5$ | $CH_3$ | 1 |
| $C_2H_5$ | i-$C_3H_7$ | $C_2H_5$ | $C_2H_5$ | 1 |
| i-$C_3H_7$ | $CH_3$ | $C_2H_5$ | $CH_3$ | 1 |
| i-$C_3H_7$ | $C_2H_5$ | $C_2H_5$ | $CH_3$ | 1 |
| i-$C_3H_7$ | n-$C_3H_7$ | $CH_3$ | $CH_3$ | 1 |
| n-$C_3H_7$ | $CH_3$ | $C_2H_5$ | $C_2H_5$ | 1 |
| n-$C_3H_7$ | $C_2H_5$ | $C_2H_5$ | $CH_3$ | 1 |
| sek-$C_4H_9$ | $CH_3$ | $CH_3$ | $CH_3$ | 1 |
| sek-$C_4H_9$ | $C_2H_5$ | $CH_3$ | tert-$C_4H_9$ | 1 |
| tert-$C_4H_9$ | $CH_3$ | $C_2H_5$ | $CH_3$ | 1 |
| $C_5H_{11}$ | $CH_3$ | $C_2H_5$ | $C_2H_5$ | 1 |
| $C_6H_{11}$ | $C_2H_5$ | $C_2H_5$ | $CH_3$ | 1 |
| F | $CH_3$ | $CH_3$ | $C_2H_5$ | 2 |
| F | $CH_3$ | $C_2H_5$ | i-$C_3H_7$ | 2 |
| F | $C_2H_5$ | $C_2H_5$ | $C_2H_5$ | 2 |
| F | $C_2H_5$ | $CH_3$ | n-$C_3H_7$ | 2 |
| F | n-$C_3H_7$ | $CH_3$ | $CH_3$ | 2 |
| F | n-$C_3H_7$ | $C_2H_5$ | i-$C_3H_7$ | 2 |
| F | n-$C_3H_7$ | $CH_3$ | $C_2H_5$ | 2 |
| F | i-$C_3H_7$ | $CH_3$ | $C_2H_5$ | 2 |
| F | i-$C_3H_7$ | $CH_3$ | n-$C_4H_9$ | 2 |
| Cl | $CH_3$ | $CH_3$ | n-$C_3H_7$ | 2 |
| Cl | $C_2H_5$ | $CH_3$ | $C_2H_5$ | 2 |
| Cl | $C_2H_5$ | $C_2H_5$ | n-$C_3H_7$ | 2 |
| Cl | $C_2H_5$ | n-$C_3H_7$ | n-$C_3H_7$ | 2 |
| Cl | n-$C_3H_7$ | $CH_3$ | $C_2H_5$ | 2 |
| Cl | n-$C_3H_7$ | $C_2H_5$ | $C_2H_5$ | 2 |
| Cl | n-$C_3H_7$ | $CH_3$ | i-$C_4H_9$ | 2 |
| Cl | n-$C_3H_7$ | $CH_3$ | n-$C_3H_7$ | 2 |
| Cl | i-$C_3H_7$ | $CH_3$ | $CH_3$ | 2 |
| Cl | i-$C_3H_7$ | $CH_3$ | i-$C_3H_7$ | 2 |
| Cl | i-$C_3H_7$ | $C_2H_5$ | i-$C_3H_7$ | 2 |
| Br | $CH_3$ | $C_2H_5$ | $C_2H_5$ | 2 |
| Br | $C_2H_5$ | $CH_3$ | $C_2H_5$ | 2 |
| Br | $C_2H_5$ | $CH_3$ | tert-$C_4H_9$ | 2 |
| Br | $C_2H_5$ | n-$C_3H_7$ | n-$C_3H_7$ | 2 |
| Br | n-$C_3H_7$ | $CH_3$ | $CH_3$ | 2 |
| Br | n-$C_3H_7$ | $CH_3$ | $C_2H_5$ | 2 |
| Br | n-$C_3H_7$ | $CH_3$ | n-$C_3H_7$ | 2 |
| Br | n-$C_3H_7$ | $C_2H_5$ | $C_2H_5$ | 2 |
| Br | i-$C_3H_7$ | $C_2H_5$ | $C_2H_5$ | 2 |
| Br | i-$C_3H_7$ | $CH_3$ | i-$C_3H_7$ | 2 |
| Br | i-$C_3H_7$ | $CH_3$ | n-$C_4H_9$ | 2 |
| $CH_3O$ | $CH_3$ | $C_2H_5$ | i-$C_3H_7$ | 3 |
| $CH_3O$ | $C_2H_5$ | $C_2H_5$ | $C_2H_5$ | 3 |
| $CH_3O$ | $C_2H_5$ | $CH_3$ | n-$C_3H_7$ | 3 |
| $CH_3O$ | n-$C_3H_7$ | $CH_3$ | $C_2H_5$ | 3 |
| $CH_3O$ | n-$C_3H_7$ | $CH_3$ | i-$C_3H_7$ | 3 |
| $CH_3O$ | n-$C_3H_7$ | $C_2H_5$ | i-$C_3H_7$ | 3 |
| $CH_3O$ | n-$C_3H_7$ | $C_2H_5$ | $C_2H_5$ | 3 |
| $CH_3O$ | i-$C_3H_7$ | $CH_3$ | $CH_3$ | 3 |
| $CH_3O$ | i-$C_3H_7$ | $CH_3$ | n-$C_3H_7$ | 3 |
| $CH_3O$ | i-$C_3H_7$ | $C_2H_5$ | n-$C_3H_7$ | 3 |
| $CH_3CH_2O$ | $CH_3$ | $C_2H_5$ | $C_2H_5$ | 3 |
| $CH_3CH_2O$ | $C_2H_5$ | $CH_3$ | $C_2H_5$ | 3 |
| $CH_3CH_2O$ | n-$C_3H_7$ | $C_2H_5$ | $C_2H_5$ | 3 |
| $CH_3CH_2O$ | n-$C_3H_7$ | $CH_3$ | $C_2H_5$ | 3 |
| i-$C_3H_7O$ | $C_2H_5$ | $CH_3$ | $C_2H_5$ | 3 |
| i-$C_3H_7O$ | n-$C_3H_7$ | $C_2H_5$ | $C_2H_5$ | 3 |
| n-$C_3H_7O$ | n-$C_3H_7$ | $CH_3$ | $CH_3$ | 3 |
| n-$C_3H_7O$ | i-$C_3H_7$ | $CH_3$ | n-$C_4H_9$ | 3 |
| n-$C_4H_9O$ | $C_2H_5$ | n-$H_4H_9$ | n-$H_4H_9$ | 3 |
| sek-$C_4H_9O$ | $CH_3$ | $CH_3$ | i-$C_3H_7$ | 3 |
| $CF_3$ | $CH_3$ | $C_2H_5$ | $C_2H_5$ | 4 |
| $CF_3$ | $C_2H_5$ | $CH_3$ | $C_2H_5$ | 4 |
| $CF_3$ | n-$C_3H_7$ | $CH_3$ | $CH_3$ | 4 |
| $CF_3$ | n-$C_3H_7$ | $CH_3$ | $C_2H_5$ | 4 |
| $Cf_3$ | n-$C_3H_7$ | $CH_3$ | n-$C_3H_7$ | 4 |
| $CF_3$ | i-$C_3H_7$ | $CH_3$ | $C_2H_5$ | 4 |

Tabelle II

Farbstoffmischungen aus Einzelfarbstoffen der Formel I. In der vorletzten Spalte ist das Mischungsverhältnis in Gew.-% angegeben.

| $R^1$ | $R^2$ | $R^3$ | $R^4$ | Gew.-% | Nuance auf Polyester |
|---|---|---|---|---|---|
| $CH_3$ | $CH_3$ | $CH_3$ | $CH_3$ | 30 | 1 |
| $CH_3$ | $C_2H_5$ | $CH_3$ | $CH_3$ | 70 | |
| $CH_3$ | $CH_3$ | $CH_3$ | $CH_3$ | 40 | 1 |
| $CH_3$ | n-$C_3H_7$ | $CH_3$ | $CH_3$ | 60 | |
| $CH_3$ | $CH_3$ | $CH_3$ | $C_2H_5$ | 30 | 1 |
| $CH_3$ | n-$C_3H_7$ | $CH_3$ | $C_2H_5$ | 70 | |
| $CH_3$ | $CH_3$ | $CH_3$ | $C_2H_5$ | 50 | 1 |
| $CH_3$ | i-$C_3H_7$ | $CH_3$ | $C_2H_5$ | 50 | |

Tabelle II (Fortsetzung)

Farbstoffmischungen aus Einzelfarbstoffen der Formel I. In der vorletzten Spalte ist das Mischungsverhältnis in Gew.-% angegeben.

| $R^1$ | $R^2$ | $R^3$ | $R^4$ | Gew.-% | Nuance auf Polyester |
|---|---|---|---|---|---|
| $CH_3$ | $CH_3$ | $C_2H_5$ | $C_2H_5$ | 15 | 1 |
| $CH_3$ | $C_2H_5$ | $C_2H_5$ | $C_2H_5$ | 30 | |
| $CH_3$ | $n\text{-}C_3H_7$ | $C_2H_5$ | $C_2H_5$ | 55 | |
| $CH_3$ | $CH_3$ | $CH_3$ | $n\text{-}C_3H_7$ | 50 | 1 |
| $CH_3$ | $n\text{-}C_3H_7$ | $CH_3$ | $n\text{-}C_3H_7$ | 50 | |
| $CH_3$ | $C_2H_5$ | $CH_3$ | $CH_3$ | 40 | 1 |
| $CH_3$ | $n\text{-}C_3H_7$ | $CH_3$ | $CH_3$ | 60 | |
| $CH_3$ | $C_2H_5$ | $CH_3$ | $C_2H_5$ | 50 | 1 |
| $CH_3$ | $n\text{-}C_3H_7$ | $CH_3$ | $C_2H_5$ | 50 | |
| $CH_3$ | $C_2H_5$ | $C_2H_5$ | $C_2H_5$ | 50 | 1 |
| $CH_3$ | $n\text{-}C_3H_7$ | $C_2H_5$ | $C_2H_5$ | 50 | |
| $CH_3$ | $C_2H_5$ | $CH_3$ | $i\text{-}C_3H_7$ | 70 | 1 |
| $CH_3$ | $i\text{-}C_3H_7$ | $CH_3$ | $i\text{-}C_3H_7$ | 30 | |
| $CH_3$ | $n\text{-}C_3H_7$ | $CH_3$ | $C_2H_5$ | 50 | 1 |
| $CH_3$ | $i\text{-}C_3H_7$ | $CH_3$ | $C_2H_5$ | 40 | |
| $CH_3$ | $i\text{-}C_3H_7$ | $CH_3$ | $CH_3$ | 10 | |
| $CH_3$ | $n\text{-}C_3H_7$ | $C_2H_5$ | $C_2H_5$ | 35 | 1 |
| $CH_3$ | $i\text{-}C_3H_7$ | $C_2H_5$ | $C_2H_5$ | 65 | |
| $CH_3$ | $n\text{-}C_3H_7$ | $CH_3$ | $CH_3$ | 45 | 1 |
| $CH_3$ | $i\text{-}C_3H_7$ | $CH_3$ | $CH_3$ | 55 | |
| $C_2H_5$ | $CH_3$ | $CH_3$ | $n\text{-}C_3H_7$ | 40 | 1 |
| $C_2H_5$ | $C_2H_5$ | $CH_3$ | $n\text{-}C_3H_7$ | 60 | |
| $C_2H_5$ | $CH_3$ | $CH_3$ | $CH_3$ | 60 | 1 |
| $C_2H_5$ | $n\text{-}C_3H_7$ | $CH_3$ | $CH_3$ | 30 | |
| $CH_3$ | $n\text{-}C_3H_7$ | $CH_3$ | $CH_3$ | 10 | |
| $C_2H_5$ | $C_2H_5$ | $CH_3$ | $CH_3$ | 50 | 1 |
| $C_2H_5$ | $n\text{-}C_3H_7$ | $CH_3$ | $CH_3$ | 50 | |
| $C_2H_5$ | $n\text{-}C_3H_7$ | $CH_3$ | $C_2H_5$ | 50 | 1 |
| $C_2H_5$ | $i\text{-}C_3H_7$ | $CH_3$ | $C_2H_5$ | 50 | |
| $n\text{-}C_3H_7$ | $C_2H_5$ | $CH_3$ | $CH_3$ | 80 | 1 |
| $n\text{-}C_3H_7$ | $i\text{-}C_3H_7$ | $CH_3$ | $CH_3$ | 20 | |
| $i\text{-}C_3H_7$ | $CH_3$ | $C_2H_5$ | $C_2H_5$ | 30 | 1 |
| $i\text{-}C_3H_7$ | $C_2H_5$ | $C_2H_5$ | $C_2H_5$ | 60 | |
| $CH_3$ | $CH_3$ | $CH_3$ | $CH_3$ | 10 | |
| $CH_3$ | $CH_3$ | $C_2H_5$ | $C_2H_5$ | 35 | 1 |
| $C_2H_5$ | $CH_3$ | $C_2H_5$ | $C_2H_5$ | 65 | |
| $CH_3$ | $n\text{-}C_3H_7$ | $CH_3$ | $n\text{-}C_3H_7$ | 15 | 1 |
| $C_2H_5$ | $C_2H_5$ | $CH_3$ | $n\text{-}C_3H_7$ | 85 | |

Tabelle II (Fortsetzung)

Farbstoffmischungen aus Einzelfarbstoffen der Formel I. In der vorletzten Spalte ist das Mischungsverhältnis in Gew.-% angegeben.

| $R^1$ | $R^2$ | $R^3$ | $R^4$ | Gew.-% | Nuance auf Polyester |
|---|---|---|---|---|---|
| $CH_3$ | $C_2H_5$ | $CH_3$ | $C_2H_5$ | 50 | 1 |
| $C_2H_5$ | $C_2H_5$ | $CH_3$ | $C_2H_5$ | 50 | |
| $CH_3$ | $C_2H_5$ | $C_2H_5$ | $C_2H_5$ | 60 | 1 |
| $i-C_3H_7$ | $CH_3$ | $C_2H_5$ | $C_2H_5$ | 40 | |
| $CH_3$ | $n-C_3H_7$ | $CH_3$ | $i-C_3H_7$ | 10 | 1 |
| $i-C_3H_7$ | $C_2H_5$ | $CH_3$ | $i-C_3H_7$ | 90 | |
| $CH_3$ | $n-C_3H_7$ | $CH_3$ | $C_2H_5$ | 70 | 1 |
| $n-C_3H_7$ | $n-C_3H_7$ | $CH_3$ | $CH_3$ | 30 | |
| $CH_3$ | $CH_3$ | $CH_3$ | $CH_3$ | 50 | 1 |
| $CH_3$ | $CH_3$ | $C_2H_5$ | $C_2H_5$ | 50 | |
| $CH_3$ | $C_2H_5$ | $CH_3$ | $CH_3$ | 40 | 1 |
| $CH_3$ | $C_2H_5$ | $CH_3$ | $C_2H_5$ | 60 | |
| $CH_3$ | $i-C_3H_7$ | $CH_3$ | $n-C_3H_7$ | 50 | 1 |
| $CH_3$ | $i-C_3H_7$ | $CH_3$ | $C_2H_5$ | 50 | |
| $CH_3$ | $n-C_3H_7$ | $CH_3$ | $CH_3$ | 50 | 1 |
| $CH_3$ | $n-C_3H_7$ | $CH_3$ | $C_2H_5$ | 50 | |
| $C_2H_5$ | $C_2H_5$ | $C_2H_5$ | $C_2H_5$ | 25 | 1 |
| $C_2H_5$ | $C_2H_5$ | $C_2H_5$ | $i-C_3H_7$ | 25 | |
| $CH_3$ | $n-C_3H_7$ | $C_2H_5$ | $C_2H_5$ | 50 | |
| Cl | $CH_3$ | $CH_3$ | $n-C_3H_7$ | 65 | 2 |
| Cl | $n-C_3H_7$ | $CH_3$ | $n-C_3H_7$ | 35 | |
| Cl | $C_2H_5$ | $CH_3$ | $CH_3$ | 40 | 2 |
| Cl | $i-C_3H_7$ | $CH_3$ | $CH_3$ | 60 | |
| Br | $CH_3$ | $C_2H_5$ | $C_2H_5$ | 65 | 2 |
| Br | $n-C_3H_7$ | $C_2H_5$ | $C_2H_5$ | 35 | |
| Br | $CH_3$ | $CH_3$ | $C_2H_5$ | 10 | 2 |
| Br | $C_2H_5$ | $CH_3$ | $C_2H_5$ | 20 | |
| Br | $n-C_3H_7$ | $CH_3$ | $CH_3$ | 70 | |
| Br | $n-C_3H_7$ | $CH_3$ | $i-C_3H_7$ | 45 | 2 |
| Br | $i-C_3H_7$ | $CH_3$ | $i-C_3H_7$ | 55 | |
| $CH_3O$ | $CH_3$ | $n-C_3H_7$ | $n-C_3H_7$ | 50 | 2 |
| $CH_3O$ | $C_2H_5$ | $n-C_3H_7$ | $n-C_3H_7$ | 50 | |
| $CH_3O$ | $C_2H_5$ | $CH_3$ | $n-C_3H_7$ | 60 | 2 |
| $CH_3O$ | $n-C_3H_7$ | $CH_3$ | $C_2H_5$ | 40 | |
| $CH_3O$ | $n-C_3H_7$ | $C_2H_5$ | $C_2H_5$ | 30 | 2 |
| $CH_3O$ | $i-C_3H_7$ | $C_2H_5$ | $C_2H_5$ | 30 | |
| $CH_3O$ | $n-C_3H_7$ | $CH_3$ | $CH_3$ | 40 | |

Tabelle II (Fortsetzung)

Farbstoffmischungen aus Einzelfarbstoffen der Formel I. In der vorletzten Spalte ist das Mischungsverhältnis in Gew.-% angegeben.

| $R^1$ | $R^2$ | $R^3$ | $R^4$ | Gew.-% | Nuance auf Polyester |
|---|---|---|---|---|---|
| $C_2H_5O$ | $C_2H_5$ | $CH_3$ | $CH_3$ | 35 | 2 |
| $C_2H_5O$ | $i\text{-}C_3H_7$ | $CH_3$ | $CH_3$ | 65 | |
| $C_2H_5O$ | $CH_3$ | $n\text{-}C_3H_7$ | $n\text{-}C_3H_7$ | 45 | 2 |
| $C_2H_5O$ | $i\text{-}C_3H_7$ | $C_2H_5$ | $C_2H_5$ | 55 | |
| $n\text{-}C_4H_9O$ | $CH_3$ | $CH_3$ | $C_2H_5$ | 55 | 2 |
| $n\text{-}C_4H_9O$ | $C_2H_5$ | $CH_3$ | $C_2H_5$ | 45 | |
| $CF_3$ | $C_2H_5$ | $CH_3$ | $n\text{-}C_3H_7$ | 60 | 2 |
| $CF_3$ | $n\text{-}C_3H_7$ | $CH_3$ | $n\text{-}C_3H_7$ | 40 | |
| $CF_3$ | $C_2H_5$ | $C_2H_5$ | $C_2H_5$ | 40 | 2 |
| $CF_3$ | $i\text{-}C_3H_7$ | $C_2H_5$ | $C_2H_5$ | 60 | |
| $CH_3$ | $n\text{-}C_3H_7$ | $C_2H_5$ | $C_2H_5$ | 65 | 5 |
| $CF_3$ | $n\text{-}C_3H_7$ | $C_2H_5$ | $C_2H_5$ | 35 | |
| $CH_3$ | $n\text{-}C_3H_7$ | $CH_3$ | $n\text{-}C_3H_7$ | 60 | 5 |
| $CF_3$ | $i\text{-}C_3H_7$ | $CH_3$ | $n\text{-}C_3H_7$ | 40 | |
| $CH_3$ | $n\text{-}C_3H_7$ | $CH_3$ | $C_2H_5$ | 55 | 5 |
| $CF_3$ | $n\text{-}C_3H_7$ | $CH_3$ | $n\text{-}C_3H_z$ | 45 | |
| $CH_3$ | $C_2H_5$ | $C_2H_5$ | $i\text{-}C_3H_7$ | 70 | 5 |
| $CF_3$ | $n\text{-}C_3H_7$ | $C_2H_5$ | $i\text{-}C_3H_7$ | 30 | |
| $C_2H_5$ | $C_2H_5$ | $CH_3$ | $CH_3$ | 40 | 5 |
| $CF_3$ | $n\text{-}C_3H_7$ | $CH_3$ | $C_2H_5$ | 60 | |
| $CH_3$ | $C_2H_5$ | $C_2H_5$ | $C_2H_5$ | 50 | 3 |
| $OCH_3$ | $C_2H_5$ | $C_2H_5$ | $C_2H_5$ | 50 | |
| $CH_3$ | $n\text{-}C_3H_7$ | $CH_3$ | $C_2H_5$ | 50 | 3 |
| $OCH_3$ | $i\text{-}C_3H_7$ | $CH_3$ | $C_2H_5$ | 50 | |
| $CH_3$ | $n\text{-}C_3H_7$ | $CH_3$ | $n\text{-}H_4H_9$ | 80 | 3 |
| $OC_2H_5$ | $CH_3$ | $n\text{-}H_4H_9$ | $n\text{-}H_4H_9$ | 20 | |
| $CH_3$ | $C_2H_5$ | $C_2H_5$ | $C_2H_5$ | 50 | 2 |
| Cl | $C_2H_5$ | $C_2H_5$ | $C_2H_5$ | 50 | |
| $CH_3$ | $C_2H_5$ | $CH_3$ | $C_2H_5$ | 30 | 2 |
| Cl | $n\text{-}C_3H_7$ | $CH_3$ | $C_2H_5$ | 70 | |
| $CH_3$ | $i\text{-}C_3H_7$ | $CH_3$ | $C_2H_5$ | 40 | 2 |
| Br | $i\text{-}C_3H_7$ | $CH_3$ | $i\text{-}C_3H_7$ | 60 | |
| $CH_3$ | $CH_3$ | $CH_3$ | $CH_3$ | 50 | 2 |
| Br | $C_2H_5$ | $C_2H_5$ | $C_2H_5$ | 50 | |
| $CH_3$ | $C_2H_5$ | $CH_3$ | $C_2H_5$ | 30 | 3 |
| F | $n\text{-}C_3H_7$ | $CH_3$ | $C_2H_5$ | 70 | |

**Patentansprüche**

1. Mischung von Monoazofarbstoffen, dadurch gekennzeichnet, dass sie zwei oder mehr verschiedene Farbstoffe der Formel I

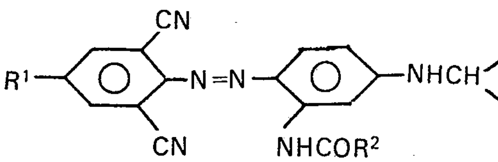

(I)

in der

$R^1$ Alkyl mit 1 bis 6 C-Atomen, Cyclopentyl, Cyclohexyl, Fluor, Chlor, Brom, Alkoxy mit 1 bis 4 C-Atomen oder Trifluormethyl,

$R^2$ Alkyl mit 1 bis 3 C-Atomen und

$R^3$ und $R^4$ unabhängig voneinander Alkyl mit 1 bis 4 C-Atomen bedeuten, enthalten oder aus diesen Farbstoffen bestehen.

2. Farbstoffmischung nach Anspruch 1, dadurch gekennzeichnet, dass der Gewichtsanteil eines Farbstoffs der Formel I 10 bis 90%, vorzugsweise 30 bis 70%, beträgt.

3. Farbstoffmischung nach Anspruch 1 oder 2, dadurch gekennzeichnet, dass $R^3$ Methyl oder Ethyl bedeutet und/oder $R^4$ Alkyl mit 1 bis 3 C-Atomen bedeutet und/oder $R^1$ Alkyl mit 1 bis 3 C-Atomen, vorzugsweise Methyl, Trifluormethyl, Chlor, Brom, Methoxy oder Ethoxy bedeutet.

4. Farbstoffmischung nach einem oder mehreren der Ansprüche 1 bis 3, dadurch gekennzeichnet, dass sich die Einzelfarbstoffe mindestens in der Bedeutung für $R^2$ unterscheiden.

5. Farbstoffmischung nach einem oder mehreren der Ansprüche 1 bis 4, dadurch gekennzeichnet, dass ein Farbstoff die Bedeutung $R^2$ = i-Propyl oder vorzugsweise n-Propyl besitzt.

6. Verfahren zur Herstellung der in einem oder mehreren der Ansprüche 1 bis 5 genannten Farbstoffmischungen, dadurch gekennzeichnet, dass

a) mindestens zwei Einzelfarbstoffe der Formel I miteinander gemischt werden oder

b) ein Amin oder mehrere Amine der Formel V

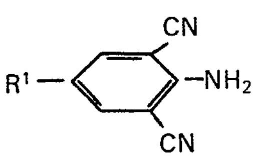

(V)

in diazotierter Form auf eine Kupplungskomponente oder auf eine Mischung aus mindestens zwei verschiedenen Kupplungskomponenten der Formel IV

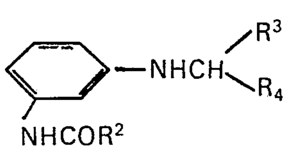

(IV)

gekuppelt wird, oder

c) dass in Farbstoffmischungen, die aus mindestens zwei Farbstoffen der Formel II

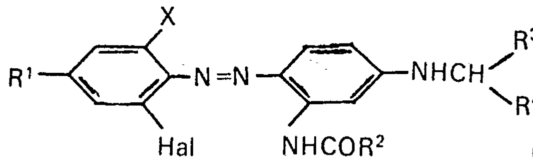

(II)

bestehen, worin X für Cyan oder Halogen und Hal für Halogen steht, in an sich bekannter Weise Halogen gegen Cyan ausgetauscht wird, wobei $R^1$, $R^2$, $R^3$ und $R^4$ die in den Ansprüchen 1 bis 5 genannten Bedeutungen besitzen, und die Farbstoffmischung gegebenenfalls in an sich bekannter Weise in eine Farbstoffzubereitung überführt wird.

7. Monoazofarbstoff der Formel I

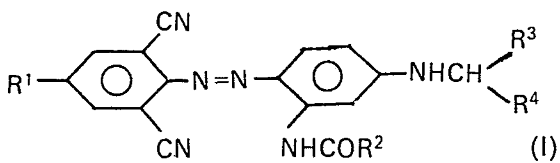

(I)

in der

$R^1$ Fluor, Chlor, Brom, Alkoxy mit 1 bis 4 C-Atomen oder Trifluormethyl,

$R^2$ Alkyl mit 1 bis 3 C-Atomen und

$R^3$ und $R^4$ unabhängig voneinander Alkyl mit 1 bis 4 C-Atomen bedeuten.

8. Monoazofarbstoff nach Anspruch 7, dadurch gekennzeichnet, dass $R^1$ Chlor, Brom, Methoxy oder Ethoxy und/oder $R^3$ Methyl oder Ethyl und/oder $R^4$ Alkyl mit 1 bis 3 C-Atomen bedeuten und/oder $R^2$ i-Propyl oder vorzugsweise n-Propyl bedeutet.

9. Verfahren zur Herstellung der Monoazofarbstoffe des Anspruchs 7 und/oder 8, dadurch gekennzeichnet, dass

a) in einem Azofarbstoff der Formel II

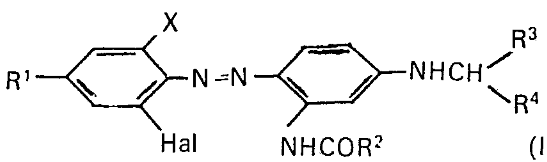

(II)

in an sich bekannter Weise Halogen gegen Cyan ausgetauscht oder

b) ein Amin der Formel V

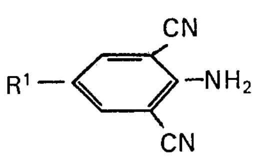

(V)

in diazotierter Form auf eine Kupplungskomponente der Formel IV

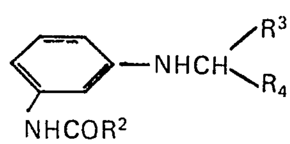

(IV)

gekuppelt wird, wobei X Cyan oder Halogen und Hal Halogen und $R^1$ bis $R^4$ die in den Ansprüchen 7 und 8 angegebenen Bedeutungen besitzen,

und der erhaltene Farbstoff gegebenenfalls in an sich bekannter Weise in eine Farbstoffzubereitung überführt wird.

10. Verfahren zum Färben und Bedrucken von hydrophoben Fasermaterialien sowie deren Mischungen mit Naturfasern oder Regeneratcellulosefasern nach an sich bekannten Färbe- und Druckverfahren, dadurch gekennzeichnet, dass die verwendete Farbflotte oder Druckpaste eine Farbstoffmischung nach einem oder mehreren der Ansprüche 1 bis 5 oder einem Einzelfarbstoff nach Anspruch 7 und/oder 8 enthält.

## Revendications

1. Mélange de colorants mono-azoïques caractérisé en ce qu'il contient ou est constitué de deux ou de plus de deux colorants répondant à la formule I:

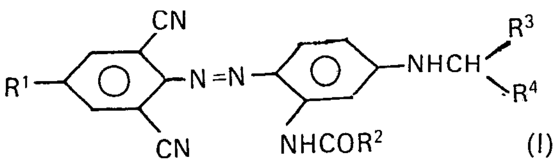

(I)

dans laquelle:

$R^1$ représente un alkyle contenant de 1 à 6 atomes de carbone, un cyclopentyle, un cyclohexyle, le fluor, le chlore, le brome, un alcoxy contenant de 1 à 4 atomes de carbone ou un trifluorométhyle,

$R^2$ représente un alkyle contenant de 1 à 3 atomes de carbone et

$R^3$ et $R^4$ représentent chacun, indépendamment l'un de l'autre, un alkyle contenant de 1 à 4 atomes de carbone.

2. Mélange de colorants selon la revendication 1, caractérisé en ce que la proportion pondérale d'un colorant de formule I est comprise entre 10 et 90%, de préférence entre 30 et 70%.

3. Mélange de colorants selon l'une des revendications 1 et 2, caractérisé en ce que $R^3$ représente un méthyle ou un éthyle et/ou $R^4$ représente un alkyle contenant de 1 à 3 atomes de carbone, et/ou $R^1$ représente un alkyle contenant de 1 à 3 atomes de carbone, de préférence un méthyle, un trifluorométhyle, le chlore, le brome, un méthoxy ou un éthoxy.

4. Mélange de colorants selon l'une quelconque des revendications 1 à 3, caractérisé en ce que les colorants qu'il contient diffèrent au moins par la signification de $R^2$.

5. Mélange de colorants selon l'une quelconque des revendications 1 à 4, caractérisé en ce que, dans l'un des colorants, $R^2$ représente un radical isopropyle ou, mieux, n-propyle.

6. Procédé de préparation des mélanges de colorants cités dans l'une quelconque des revendications 1 à 5, procédé caractérisé en ce que:

a) on mélange entre eux deux ou plus de deux colorants isolés de formule I, ou

b) on copule une ou plusieurs amines de formule V:

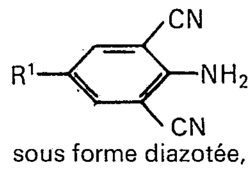

(V),

sous forme diazotée, avec un copulant ou un mélange de deux ou de plus de deux copulants de formule IV:

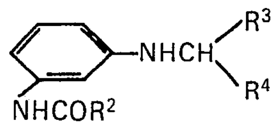

(IV),

ou

c) dans des mélanges de colorants constitués de deux ou de plus de deux colorants répondant à la formule II

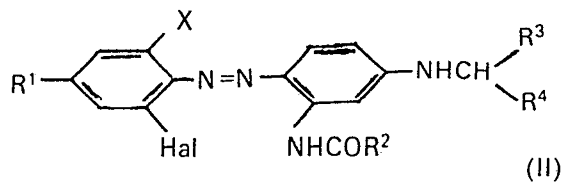

(II)

dans laquelle X représente un radical cyano ou un halogène, et Hal représente un halogène (dans les formules précédentes les symboles $R^1$, $R^2$, $R^3$ et $R^4$ ont les significations qui leur ont été données dans les revendications 1 à 5), on échange de manière connue l'halogène contre un radical cyano, et on transforme éventuellement le mélange de colorants, de manière connue, en une composition de colorants.

7. Colorant mono-azoïque répondant à la formule I:

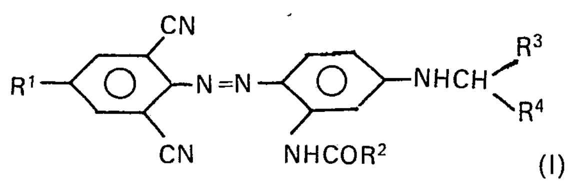

(I)

dans laquelle:

$R^1$ représente le fluor, le chlore, le brome, un alcoxy contenant de 1 à 4 atomes de carbone ou un trifluorométhyle,

$R^2$ représente un alkyle contenant de 1 à 3 atomes de carbone et

$R^3$ et $R^4$ représentent chacun, indépendamment l'un de l'autre, un alkyle contenant de 1 à 4 atomes de carbone.

8. Colorant mono-azoïque selon la revendication 7, caractérisé en ce que $R^1$ représente le chlore, le brome, un méthoxy ou un éthoxy et/ou $R^3$ représente un méthyle ou un éthyle et/ou $R^4$ représente un alkyle contenant de 1 à 3 atomes de carbone et/ou $R^2$ représente un isopropyle ou, mieux, un n-propyle.

9. Procédé de préparation des colorants mono-azoïques selon l'une des revendications 7 et 8, procédé caractérisé en ce que:

a) dans un colorant azoïque de formule II:

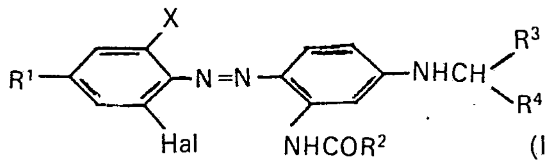

(II)

on échange l'halogène contre un radical cyano de manière connue, ou

b) on copule une amine de formule V:

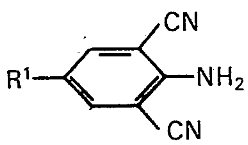

(V),

sous forme diazotée, avec un copulant de formule IV:

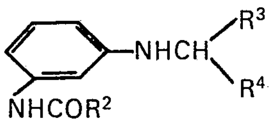

(IV),

formules dans lesquelles X représente un radical cyano ou un halogène, Hal représente un halogène, et $R^1$ à $R^4$ ont les significations qui leur ont été données dans les revendications 7 et 8, et on transforme éventuellement le colorant obtenu, de manière connue, en une composition de colorant.

10. Procédé pour teindre et imprimer des matières fibreuses hydrophobes ainsi que leurs mélanges avec des fibres naturelles ou des fibres en cellulose régénérée, par des méthodes de teinture et d'impression connues, procédé caractérisé en ce que le bain de teinture ou la pâte d'impression utilisée contient un mélange de colorants selon l'une quelconque des revendications 1 à 5 ou un colorant isolé selon l'une des revendications 7 et 8.

## Claims

1. Mixture of monoazo dyestuffs, characterised in that they contain or consist of two or more different dyestuffs of the formula I

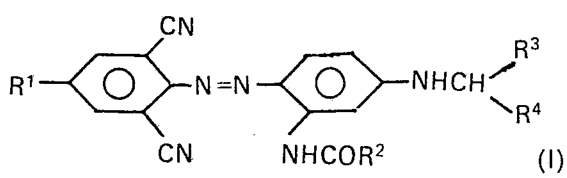

(I)

in which

$R^1$ denotes alkyl of 1 to 6 carbon atoms, cyclopentyl, cyclohexyl, fluorine, chlorine, bromine, alkoxy of 1 to 4 carbon atoms or trifluoromethyl,

$R^2$ denotes alkyl of 1 to 3 carbon atoms and

$R^3$ and $R^4$, independently of the other, each denote alkyl of 1 to 4 carbon atoms.

2. Dyestuff mixture according to claim 1, characterised in that the weight proportion of a dyestuff of the formula I is 10 to 90%, preferably 30 to 70%.

3. Dyestuff mixture according to claim 1 or 2, characterised in that $R^3$ denotes methyl or ethyl, and/or $R^4$ denotes alkyl of 1 to 3 carbon atoms, and/or $R^1$ denotes alkyl of 1 to 3 carbon atoms, preferably methyl, trifluoromethyl, chlorine, bromine, methoxy or ethoxy.

4. Dyestuff mixture according to one or more of claims 1 to 3, characterised in that the individual dyestuffs differ at least in the meaning of $R^2$.

5. Dyestuff mixture according to one or more of claims 1 to 4, characterised in that in one of the dyestuffs $R^2$ is isopropyl or preferably n-propyl.

6. Process for preparing the dyestuff mixtures mentioned in one or more of claims 1 to 5, characterised in that

a) at least two individual dyestuffs of the formula I are mixed with each other or

b) one or more amines of the formula V

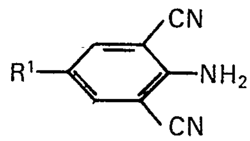

(V)

are coupled in diazotised form onto a coupling component or onto a mixture of at least two different coupling components of the formula IV

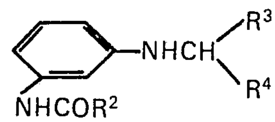

(IV)

or

c) replacing in dyestuff mixtures which consist of at least two dyestuffs of the formula II

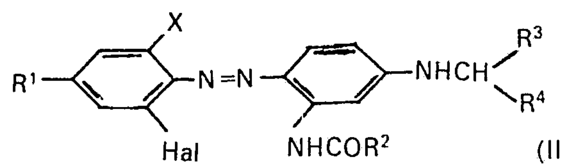

(II)

in which X stands for cyano or halogen, Hal stands for halogen and $R^1$, $R^2$, $R^3$ and $R^4$ are as defined in claims 1 to 5, halogen is replaced by cyano in a manner known per se, and if desired the dyestuff mixture is converted, in a manner known per se, into a dyestuff preparation.

7. Monoazo dyestuff of the formula I

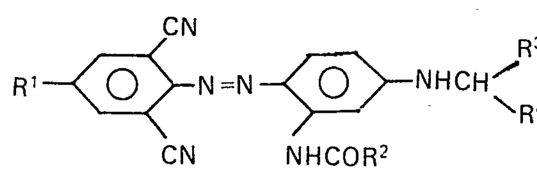

(I)

in which $R^1$ denotes fluorine, chlorine, bromine, alkoxy of 1 to 4 carbon atoms or trifluoromethyl,

$R^2$ denotes alkyl of 1 to 3 carbon atoms and

$R^3$ and $R^4$, independently of the other, each denote alkyl of 1 to 4 carbon atoms.

8. Monoazo dyestuff according to claim 7, characterised in that $R^1$ denotes chlorine, bromine, methoxy or ethoxy and/or $R^3$ denotes methyl or ethyl and/or $R^4$ denotes alkyl of 1 to 3 carbon atoms and/or $R^2$ denotes i-propyl or preferably n-propyl.

9. Process for preparing the monoazo dyestuffs of claim 7 and/or 8, characterised in that

a) in an azo dyestuff of the formula II

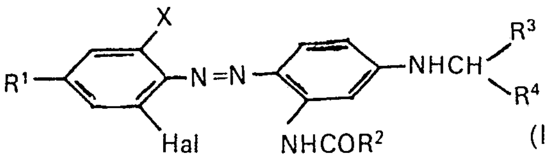

(II)

halogen is replaced by cyano in a manner known per se or

b) an amine of the formula V

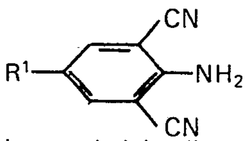

(V)

is coupled in diazotised form onto a coupling component of the formula IV

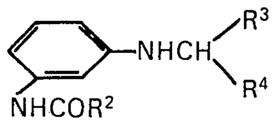

(IV)

where X denotes cyano or halogen, Hal denotes halogen, and $R^1$ to $R^4$ are as defined in claims 7 and 8, and the resulting dyestuff is, if desired, converted, in a manner known per se, into a dyestuff preparation.

10. Process for dyeing and printing hydrophobic fibre materials and their mixtures with natural fibres or regenerated cellulose fibres by dyeing and printing methods known per se, characterised in that the dyeing liquor or print paste employed contains a dyestuff mixture according to one or more of claims 1 to 5 or an individual dyestuff according to one or more of claim 7 and/or 8.